# EUROPÄISCHE PATENTSCHRIFT

(11) **EP 1 019 669 B1**
(45) Veröffentlichungstag und Bekanntmachung des Hinweises auf die Patenterteilung: **24.07.2002**
(21) Anmeldenummer: 98941656.5
(22) Anmeldetag: 24.09.1998
(51) Int. Cl.: G01B 11/00, G01B 7/004, G01B 7/34

(54) **VORRICHTUNG ZUR ERFASSUNG DER POSITION VON ZWEI KÖRPERN**
DEVICE FOR DETECTING THE POSITION OF TWO BODIES
DISPOSITIF DE DETECTION DE LA POSITION DE DEUX CORPS

(30) Priorität: 29.09.1997 CH 227997
(43) Veröffentlichungstag der Anmeldung: 19.07.2000
(73) Patentinhaber: Dr. Johannes Heidenhain GmbH, 83301 Traunreut (DE)
(72) Erfinder: WEIKERT, Sascha, CH-8127 Forch (CH); BRAASCH, Jan, D-83308 Trostberg (DE); CALLIMICI, Christian, D-83714 Miesbach (DE)
(74) Vertreter: Troesch Scheidegger Werner AG
(86) Internationale Anmeldenummer: IB9801476
(87) Internationale Veröffentlichungsnummer: WO9917073

(56) Entgegenhaltungen:
- GB-A- 2 034 880
- DATABASE WPI Section Ch, Week 9647 Derwent Publications Ltd., London, GB; Class G06, AN 96-474249 XP002065621 & JP 08 241850 A (CANON KK) , 17. September 1996

## Beschreibung

Die vorliegende Erfindung betrifft eine Vorrichtung zur Erfassung und/oder Einstellung der Position von zwei relativ zueinander bewegbaren Körpern, mit an den Körpern angeordneten Kreuzstrichgittern, d.h. im Grunde genommen eine Messeinrichtung, welche die gleichzeitige Erfassung der sechs möglichen Bewegungskomponenten bei primär ebenen (2-D-translatorischen) Relativbewegungen zweier Körper erlaubt.

Bei bekannten Vorrichtungen dieser Art sind nicht alle sechs möglichen Bewegungskomponenten erfassbar, und es sind zudem Referenzkörper (Normale) mit zwei bis drei präzise zueinander angeordneten, ebenen Referenzflächen erforderlich.

GB-A-2034880 offenbart eine Vorrichtung zur Durchführung von linearen Messungen in zwei Dimensionen. Ein Wagen ist auf Führungsschienen in zwei Dimensionen über eine Basis beweglich. Auf dem Wagen befindet sich eine Fläche, auf welcher ein zu messender Gegenstand aufgebracht werden kann. Die Unterseite der Fläche trägt ein erstes optisches Gitter, bestehend aus zwei Gruppen von dicht aneinander angeordneten parallelen Linien, wobei die beiden Gruppen von Linien im rechten Winkel zueinander stehen. Eine Sonde ist oberhalb der Fläche angeordnet. Auf der Basis unterhalb des Wagens sind zwei Leseköpfe angeordnet. Die Leseköpfe umfassen jeweils ein Gitter, bestehend aus parallelen Linien mit dem gleichen Zeilenabstand wie derjenige des ersten optischen Gitters. Die Linien der Leseköpfe erstrecken sich jeweils parallel zu einer Gruppe des ersten Gitters. Die zwei Leseköpfe werden verwendet, um Bewegungen des Wagens in die zwei senkrechten Richtungen über Auswertung der Intensitätsschwankungen des reflektierten Lichtes zu erfassen.

Die bekannten Vorrichtungen sind nicht nur bezüglich Erfassung von Bewegungskomponenten beschränkt, sondern zudem ausserordentlich aufwendig im Aufbau. In der Regel basieren sie auf der Verwendung eines linearen Normals.

Aufgabe der vorliegenden Erfindung ist es, eine Vorrichtung zu schaffen, welche bei einfachem Aufbau die Erfassung aller sechs Bewegungskomponenten erlaubt.

Diese Aufgabe wird bei einer Vorrichtung der eingangs definierten Art erfindungsgemäss durch die Merkmale des kennzeichnenden Teils von Anspruch 1 gelöst.

Besonders vorteilhafte Ausführungsformen der Erfindung sind in den abhängigen Ansprüchen definiert.

Dank der Erfindung sind zwei Relativtranslationen und eine Drehung auf optischem Weg erfassbar und gleichzeitig die Abstände an drei Stellen zwischen zwei Flächen der Körper, so dass alle sechs Komponenten der Relativbewegung der Körper erfasst sind.

Bisher war die Herstellung von Normalen (Referenzkörpern) mit zwei bis drei präzise zueinander angeordneten, ebenen Referenzflächen notwendig. Nunmehr ist nur die Erstellung einer Fläche erforderlich, was einen erheblich geringeren fertigungstechnischen Aufwand darstellt. Die Verwendung von quaderförmigen Normalen mit zwei oder mehr Referenzflächen bedeutet einen im Vergleich dazu erheblich grösseren apparativen Aufwand bei der Durchführung von Messungen.

Bisher war eine exakte räumliche Ausrichtung der Komponenten erforderlich. Hierbei musste die Parallelität der Messsystemkomponenten bezüglich zweier Ebenen zur Durchführung der Messung gewährleistet sein. Bei der vorliegenden Erfindung sind zwei Körper nur bezüglich einer Ebene grob parallel zueinander anzuordnen, was durch die Abstandserfassungseinrichtungen zusätzlich erleichtert wird (drei gleiche Abstände = beide Ebenen parallel). Ein wie in den bisherigen Fällen erforderlicher Fügevorgang ist nicht erforderlich, was die Durchführung von Messungen erheblich erleichtert.

Die Verwendung inkrementeller Positionsmessysteme mit Gitterteilung zur Positions- und Lageerfassung bedeutet für die Erfassung: hohe Genauigkeit, hohe Auflösung, Störunempfindlichkeit (elektromagnetisch), Stabilität gegenüber atmosphärischen Einflüssen (Lufttemperatur, -feuchte, -druck), wie sie sich bei Verwendung von Laserinterferometern störend auswirken können.

Die Erfindung wird nachstehend, teilweise anhand der Zeichnung, noch etwas näher erläutert.

Es zeigt:
- Fig. 1: rein schematisch das Koordinatensystem nach ISO für Bewegungen mit sechs Freiheitsgraden;
- Fig. 2: den schematischen Aufbau der erfindungsgemässen Vorrichtung (Messystem);
- Fig. 3a bis 3c: verschiedene Varianten, rein schematisch, von Messsystemen;
- Fig. 4: eine weitere Anwendung der erfindungsgemässen Vorrichtung;
- Fig. 5: eine Anwendung zur Kalibration eines Manipulators; und
- Fig. 6a und 6b: eine Anwendung der erfindungsgemässen Vorrichtung zum Positionieren des Körpers eines Wafer-Steppers.

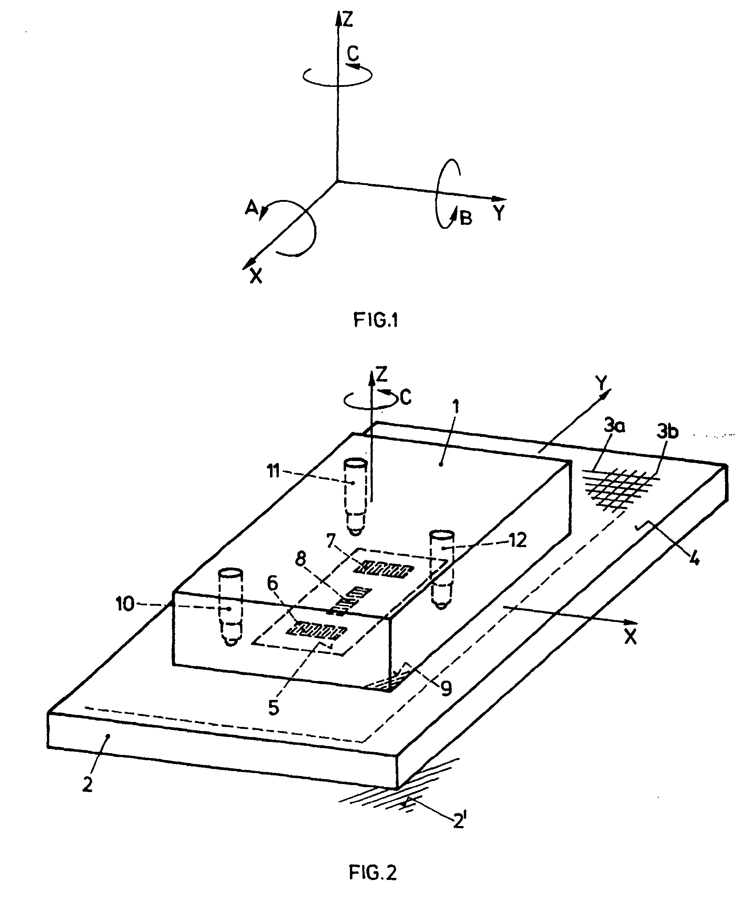

Ein starrer Körper weist sechs Bewegungsfreiheitsgrade auf: Drei translatorische Bewegungskomponenten: X-, Y- und Z-Komponente, und drei rotative Freiheitsgrade: A-, B- und C. Die Position und Lage eines Körpers wird durch Angabe der sechs Freiheitsgrade vollständig beschrieben. Durch Angabe des zeitlichen Verlaufs dieser sechs Grössen wird die Bewegung des Körpers vollständig festgelegt. Die Anordnung dieser Freiheitsgrade ist an einem Koordinatensystem (nach ISO) in Fig. 1 dargestellt.

### Hintergründe der Erfassung der Bahngenauigkeit an Handhabungsgeräten resp. speziell von Werkzeugmaschinen

Die Erfassung der relativen Lage von Werkzeug und Werkstück an Werkzeugmaschinen oder anderen Handhabungsgeräten stellt eine zentrale Aufgabe der Maschinenmetrologie dar. Eine Reihe von Messgeräten wurde hierfür entwickelt. Kennzeichen bisheriger Einrichtungen ist, dass immer nur Teilkomponenten der Relativbewegungen erfasst werden, und nicht alle sechs Freiheitsgrade, die die Relativbewegung vollständig beschreiben, erfasst werden können.

Die Überprüfung der statischen und dynamischen Genauigkeit von Werkzeugmaschinen und Handhabungsgeräten erfolgt somit durch die getrennte Erfassung einzelner Geometriemerkmale durch eine Vielzahl von Messgeräten. Die Anwendung der verschiedenen Messmittel bedeutet einen zum Teil erheblichen apparativen und zeitlichen Aufwand. Zudem treten zwischen den verschiedenen Messungen Änderungen des zu untersuchenden Systems auf, die bisher nicht berücksichtigt werden konnten.

Einrichtungen, die die Erfassung aller sechs Bewegungskomponenten erlauben, weisen im Gegensatz zur vorliegenden Einrichtung eine lineare Vorzugsrichtung auf. Diese Messeinrichtungen erlauben demnach nur die Erfassung der sehr eingeschränkten Bewegungskomponenten in Nichtvorzugsrichtung, im Folgenden mit X-Richtung bezeichnet. Somit ist die Erfassung von Bewegungen mit mehr als einer ausgeprägten Bewegungskoordinate nicht möglich. Demgegenüber erlaubt die vorliegende Erfindung die Erfassung aller Bewegungskomponenten bei primär zweidimensionalen (ebenen) Bewegungen. Somit ist erstmals die kohärente Erfassung aller Bewegungskomponenten bei allgemeinen ebenen Bahnen möglich. Kohärenz der Messungen ist erforderlich, um Änderungen des zu untersuchenden Systems während der Durchführung der Messung auszuschliessen. Die Möglichkeit von kohärenten Messungen eröffnet im Vergleich zu bisherigen Vorgehensweisen eine erhebliche Zeit- und Kostenersparnis. Die einzige Möglichkeit einer zumindest ansatzweisen Erfassung des vollständigen Maschinenverhaltens bestand bisher in der Durchführung von Bearbeitungsversuchen. Die Relativbewegung von Werkzeug und Werkstück kann unter Ausklammerung der Drehbewegung des rotierenden Werkzeugs indirekt und unter Beeinträchtigung der erhaltenen Aussage durch die durch den Prozess überlagerten Einflüsse ermittelt werden. Die Geometrieinformationen müssen dann aus der Gestalt des Werkstücks auf messtechnischem Wege abgeleitet werden. Bei derartigen Überprüfungen kann jedoch der zeitliche Verlauf der Abweichungsgrössen nicht festgestellt werden.

### Aufbau des erfindungsgemäss ausgestalteten Messystems

Wie Fig. 2 zeigt, ist ein Körper 1 mit einer Basis (Werkzeughalterung, nicht dargestellt) fest verbunden. Ein Körper 2 ist mit einer Grundplatte 2' (Werkstückauflage) starr verbunden, deren Relativbewegung zur genannten Basis erfasst werden soll. Wird nun über beispielsweise eine Steuerungseinrichtung der Körper 1 näherungsweise in der X-Y-Ebene bewegt, werden alle Bewegungskomponenten der Relativbewegung erfasst.

Die Einrichtung besteht aus zwei Körpern 1, 2. Der Körper 2 trägt eine Anordnung zweier orthogonaler Strichgitter 3a, 3b in einer Ebene 4. Der Körper 1 ist ebenfalls mit einer ebenen Anordnung 5 von Strichgittern 6, 7 und 8 ausgestattet.

Von diesen Strichgittern in der Ebene 9 sind zwei parallel, nämlich 6 und 7, und das dritte, 8, ist zu diesen ersten senkrecht angeordnet.

Diese Anordnung von Strichgittern 3a, 3b und 6 bis 8 erlaubt die Erfassung der translatorischen Relativbewegung der Körper 1, 2 in X- und Y-Richtung, sowie gleichzeitig die Erfassung der rotativen Relativbewegung (C) der beiden Körper durch Vergleich der festgestellten Positionen der beiden parallelen Strichgitter 6 und 7. Werden nun zusätzlich zwischen den beiden Körpern 1 und 2 Einrichtungen zur Erfassung der Abstände der Körper vorgesehen, so werden gleichzeitig mit den beiden translatorischen und dem einen rotativen Freiheitsgrad ein weiterer translatorischer und zwei weitere rotative Freiheitsgrade erfasst: Auf bzw. zwischen den beiden Körpern 1, 2 sind drei Einrichtungen 10, 11, 12 zur Abstandserfassung angebracht, in einer Art, dass Abstände zwischen den beiden Körpern 1 und 2 bzw. zwischen den beiden Ebenen 4 und 9 erfasst werden. Die Anordnung der Abstandserfassungseinrichtungen (kapazitiv, induktiv, tastend oder durch Staudruckmessungen) ist prinzipiell freigestellt, jedoch dürfen die Messorte zur Erfassung der Abstände aus geometrischen Gründen nicht auf einer Geraden liegen. Die Auswertung der drei Abstände liefert Angaben über den translatorischen Freiheitsgrad dZ und die rotativen Freiheitsgrade dA und dB. Werden weniger als drei Abstandsmessstellen verwendet, können entsprechend weniger Bewegungskomponenten erfasst werden:
- 3 Taster:: dZ, dA, dB werden explizit bestimmbar;
- 2 Taster:: dZ ist explizit, dA und dB nur in der Summe bestimmbar;
- 1 Taster:: dZ kann explizit, allerdings mit Einschränkungen, dA und dB können nicht bestimmt werden.

Ähnlich verhält es sich mit dem Umfang der Aussagen bei Verwendung von weniger als 3 Strichgittern am Körper 1:

### 3 Strichgitter, davon 2 orthogonal, das dritte parallel zu einem der beiden ersten Gitter:

Erfassung der zwei Relativtranslationen und der Relativrotation um senkrecht zu diesen Translationen stehende Achse.

### 2 Gitter, orthogonal:

Die zweidimensionale, translatorische Bewegung wird erfasst, es ist keine Aussage über die Rotation um die Achse senkrecht zu den beiden Translationsbewegungen möglich;

### 1 Strichgitter:

Nur die Bewegung quer zur betreffenden Strichteilung kann erfasst werden.

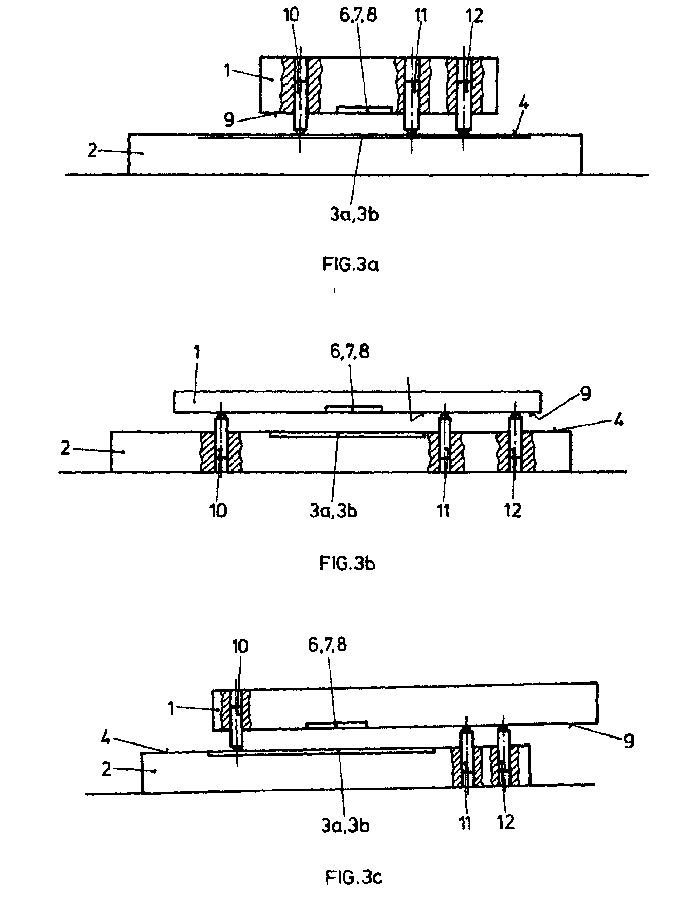

### Darstellung von verschiedenen Bauarten gemäss Fig. 3a bis 3c:

Fig. 3a: Flächige Gitterteilung 3a, 3b und Abstandsreferenzfläche am selben Körper; die flächige Gitterteilung ist am Körper 2 angebracht, die drei Strichgitter 6, 7 und 8 am Körper 1, die Abstandserfassungseinrichtungen 10, 11, 12 (als Taster ausgeführt) sind am Körper 1 angebracht und erfassen drei Abstände auf die Referenzfläche 4 am Körper 2.

Fig. 3b: Flächige Gitterteilung an Körper 1, Abstandsreferenzfläche am anderen Körper 2. Die flächige Gitterteilung 3a, 3b ist am Körper 2 angebracht, die drei Strichgitter 6, 7 und 8 am Körper 1, die Abstandserfassungseinrichtungen 10, 11, 12 (als Taster ausgeführt) sind am Körper 2 angebracht und erfassen drei Abstände auf die Referenzfläche 9 am Körper 1.

Fig. 3c: Flächige Gitterteilung am Körper 1 und Abstandsreferenzflächen an beiden Körpern; die flächige Gitterteilung 3a,

3b ist am Körper 2 angebracht, die drei Strichgitter 6, 7, 8 am Körper 1, die Abstandserfassungeinrichtungen sind aufgeteilt: 10 ist am Körper 1, 11, 12 sind am Körper 2 angebracht und erfassen den Abstand auf die Referenzfläche 4 am Körper 2 bzw. die Abstände auf die Referenzfläche 9 am Körper 1.

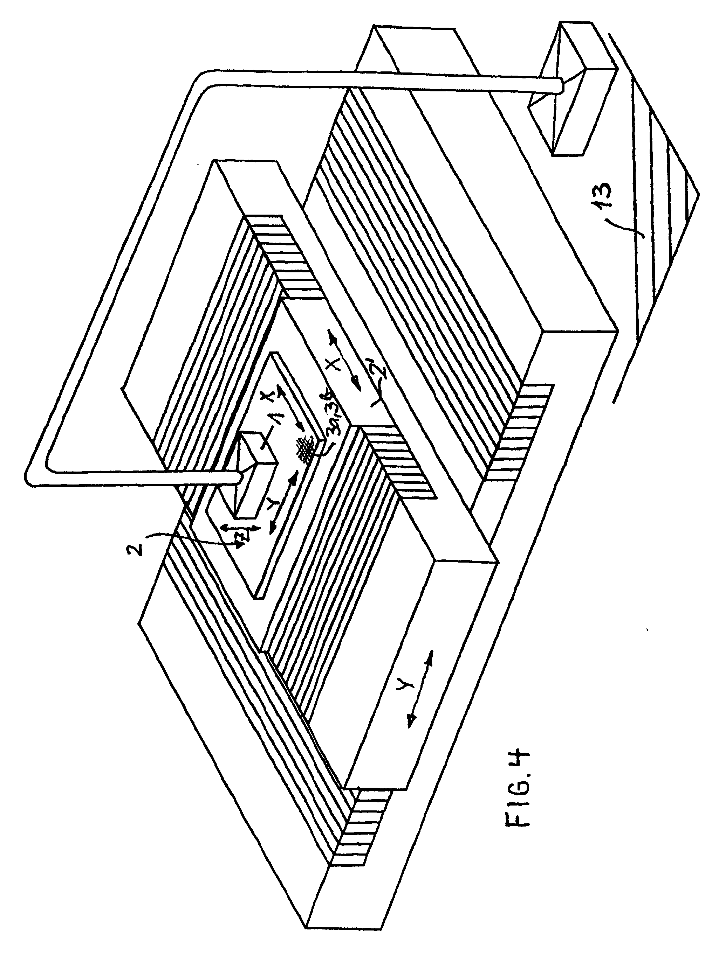

Fig. 4 zeigt eine weitere Anwendung:

Zur Untersuchung von Linearführungssystemen, Aufbauten, die im Werkzeugmaschinenbau weit verbreitet sind, wird das flächige Normal 2 auf den in zwei translatorischen Bewegungsrichtungen verschiebbaren Tisch 2' angebracht. Durch das Messgerät können nun in beliebigen Positionen des zweidimensionalen Verfahrbereiches alle translatorischen und rotativen Abweichungen von der idealen, translatorischen 2-D-Bewegung gegenüber einer Basis 13 erfasst werden.

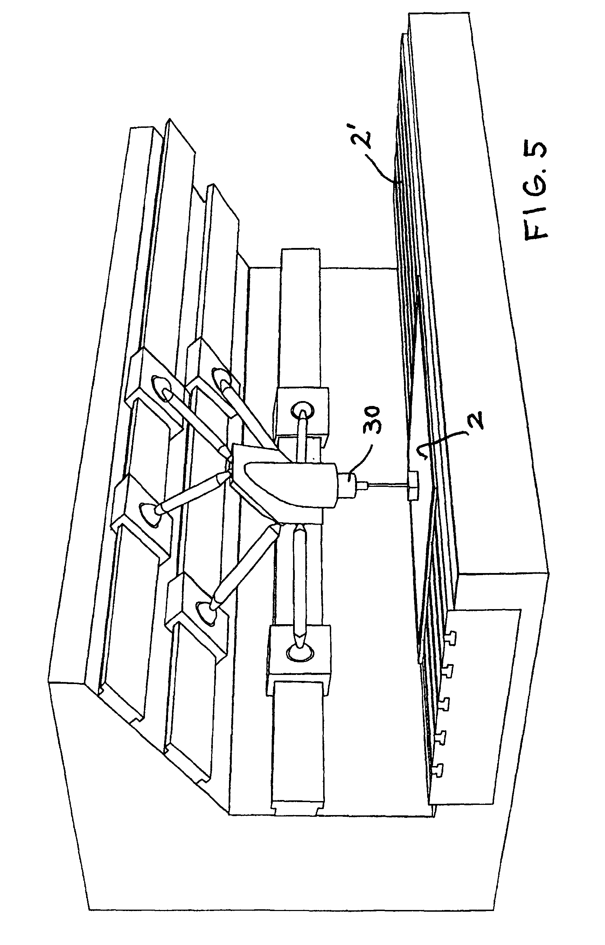

Die Fig. 5 zeigt eine Anwendung zur Kalibration eines Manipulators: Die Kalibration von Manipulatoren, seriellen oder parallelen Bewegungseinrichtungen erfordert die Kenntnis der Lage und Orientierung des Endeffektors in bezug auf ein ortsfestes, gegebenes Bezugssystem. Durch Erfassung der sechsachsigen Position und Lage des Endeffektors 30 im gegebenen Bezugssystem, bestimmt durch eine Werkstückaufspannfläche 2', wird die Bestimmung von Korrekturwerten für den späteren Betrieb und/oder die Erfassung der effektiven Manipulator-Geometrieeigenschaften ermöglicht. Die Möglichkeit der Verteilung der Messpunkte in einer Ebene, aufgespannt durch das flächige Normal 2, bedeutet eine erhebliche Verbesserung der Kalibrationsmöglichkeiten im Vergleich zu ausschliesslich 1-D-linear wählbaren Messpunkten, da bei der gleichen Messung die anzufahrenden Messpunkte eine

Ebene aufspannen.

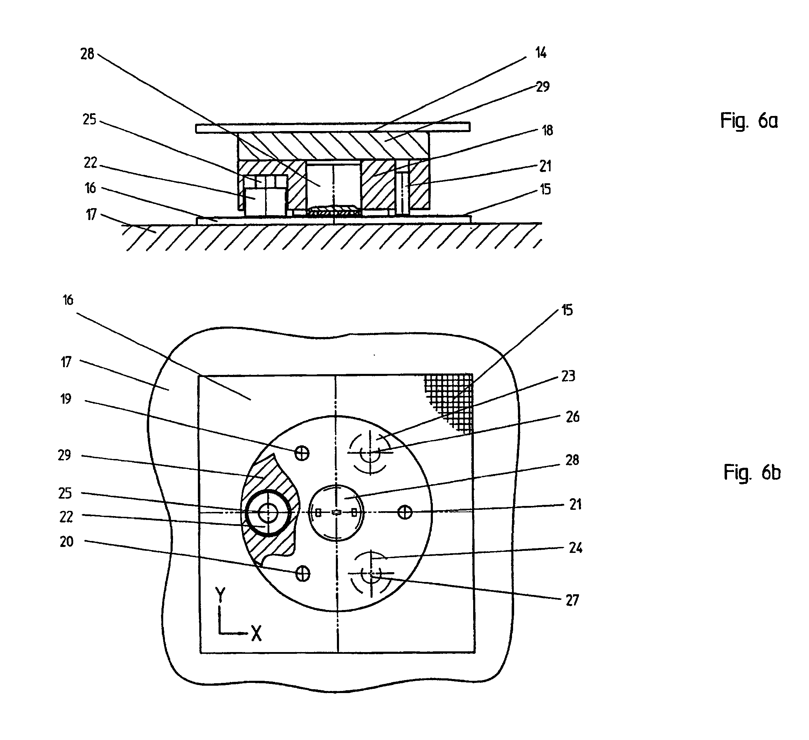

Die Fig. 6a und 6b schliesslich zeigen eine Vorrichtung zum Positionieren eines Teils 14, beispielsweise eines Wafers, in allen Freiheitsgraden, bei einer primär zweidimensional translatorischen Grundbewegung.

Die Vorrichtung besteht aus einem mit einer zweidimensionalen, optischen Gitterteilung (Kreuzgitter) 15 versehenen ebenen Körper 16, der aus Glas oder Metall sein kann und der auf einer massiven Grundplatte 17 befestigt ist. In einem darüber angeordneten Komponenten-Trägerkörper 18 befinden sich, symmetrisch verteilt, drei vertikal zum Kreuzgitter 15 angeordnete Abstandserfassungs-Einrichtungen 19, 20, 21, die Taster oder kapazitive Sensoren sein können.

Zwischen den Abstandserfassungs-Einrichtungen 19, 20, 21 sind zweckmässig drei Luftlager 22, 23, 24 angeordnet, die auf dem unteren Körper 16 mit dem Kreuzgitter 15 berührungslos aufliegen. Statt der Luftlager 22, 23, 24 können natürlich auch andere berührungsfrei arbeitende Lager Verwendung finden, beispielsweise Magnetlager. Zwischen den Luftlagern 22, 23, 24 und dem Komponenten-Trägerkörper 18 sind ferner Stellantriebe 25, 26, 27 angeordnet, die Piezo-Aktoren sein können. Mit den Stellantrieben 25, 26, 27 kann der Abstand zwischen dem Komponenten-Trägerkörper 18 und dem darunterliegenden Körper 16 feinfühlig verändert werden.

In der Mitte des Komponenten-Trägerkörpers 18 ist der zugehörige Abtastkopf 28 für die Kreuzgitter 15 positioniert. Der Abtastkopf 28 weist entsprechend der Anordnung nach Fig. 2 wieder drei Strichgitter auf, von denen zwei zueinander parallel angeordnet sind. Dieser Abtastkopf 28 kann Bewegungen des Komponenten-Trägerkörpers 18 in der X- und Y-Achse sowie Rotationen in der XY-Ebene bezüglich des Kreuzgitters 15 auf optischem Wege erfassen.

Auf dem Komponenten-Trägerkörper 18 ist noch eine Zwischenplatte 29 befestigt. An die Zwischenplatte 29 wird in nicht gezeigter Weise der externe Antrieb, beispielsweise drei Linearmotoren, angekoppelt, der die gesamte luftgelagerte Baueinheit in der X- und Y-Achse bewegt und bezüglich der XY-Ebene drehen kann. Die Oberseite der Zwischenplatte 29 ist gleichzeitig die Aufnahmefläche für das zu positionierende Teil (Wafer) 14, das zum Beispiel mit Vacuum auf die Zwischenplatte 29 gesaugt und damit fixiert werden kann.

Mit der oben beschriebenen Vorrichtung und einer elektronischen Regelung kann zum Beispiel ein Wafer 14 bezüglich aller seiner sechs möglichen Komponenten der Relativbewegung zu einer ebenen Grundfläche positioniert werden. Die Relativbewegungen in X-Y-Richtung und die Rotationen in der XY-Ebene werden dabei von den externen Antrieben (z.B. Linearmotoren) bewirkt und von dem zentralen Abtastkopf 28 erfasst. Ausserdem können die über den drei Luftlagern 22, 23, 24 angeordneten drei Stellantriebe 25, 26, 27 den Abstand des Wafers 14 zum ebenen Körper 16 variieren. Diese Relativbewegung wird mit den drei Abstandserfassungs-Einrichtungen 19, 20, 21 registriert.

Allgemein kann eine solche Vorrichtung überall dort eingesetzt werden, wo man ein Teil, in diesem Fall Wafer 14, das primär zweidimensional translatorisch bewegt werden soll, noch zusätzlich in allen anderen Komponenten der möglichen Relativbewegungen sehr genau justieren möchte, wie dies zum Beispiel bei einem Wafer-Stepper der Fall ist.

## Patentansprüche

1. Vorrichtung zur Erfassung und/oder Einstellung der Position von zwei relativ zueinander bewegbaren Körpern, mit an den Körpern angeordneten Kreuzstrichgittern, **dadurch gekennzeichnet, dass** am einen Körper (2) ein ebenes flächiges Normal als ebene Referenzfläche (4) mit einer zweidimensionalen Gitterteilung (3a, 3b) angeordnet ist, sowie am anderen Körper (1) eine parallel zum Normal ausrichtbare ebene Fläche (9) mit in dieser oder parallel dazu vorgesehenen mindestens zwei Gittern (6, 7, 8), welche einen Lesekopf bilden, und dass ferner mindestens eine zwischen den genannten beiden Körperflächen wirksame Einrichtung (10, 11, 12) zur individuellen Abstandserfassung der beiden Flächen (4, 9) vorgesehen ist.

2. Vorrichtung nach Anspruch 1, **dadurch gekennzeichnet, dass** zwischen den beiden Körperflächen drei Abstandserfassungs-Einrichtungen vorgesehen sind, welche an drei nicht auf einer gemeinsamen Geraden liegenden Stellen angeordnet sind.

3. Vorrichtung nach Anspruch 1 oder 2, **dadurch gekennzeichnet, dass** am genannten anderen Körper drei Strichgitter vorgesehen sind, davon zwei zueinander parallele Gitter.

4. Vorrichtung nach einem der Ansprüche 1 bis 3, **dadurch gekennzeichnet, dass** die Abstandserfassungseinrichtungen kapazitiv, induktiv, mechanisch tastend oder mittels Staudruck arbeitende Geräte sind.

5. Vorrichtung nach Anspruch 4, **dadurch gekennzeichnet, dass** die Abstandserfassungseinrichtungen als Taster ausgebildet und senkrecht aus der einen und/oder anderen Fläche vorstehen.

6. Vorrichtung nach einem der Ansprüche 1 bis 5, **dadurch gekennzeichnet, dass** Mittel zur Speicherung und/oder Verarbeitung der anlässlich einer beliebigen Relativbewegung der beiden Körper erfassten Positionswerte oder zur gesteuerten Durchführung einer solchen Bewegung aufgrund vorgegebener Zielwerte vorgesehen sind.

7. Vorrichtung nach einem der Ansprüche 1 bis 6, **dadurch gekennzeichnet, dass** die Strichgitter optische Gitter sind.

8. Vorrichtung zum Positionieren von Teilen, vorzugsweise eines Wafer-Steppers nach einem der Ansprüche 1 bis 7, **dadurch gekennzeichnet, dass** am Komponenten-Trägerkörper für die Abstandserfassungs-Einrichtungen noch berührungsfrei arbeitende Lager und Stellantriebe vorgesehen sind, mit denen der Abstand oder die Lage zwischen dem Komponenten-Trägerkörper und der zweidimensionalen Gitterteilung (Kreuzgitter) bzw. deren Trägerkörper unter Zuhilfenahme der Abstandserfassungs-Einrichtungen einstellbar ist.

9. Vorrichtung nach Anspruch 8, **dadurch gekennzeichnet, dass** die berührungsfrei arbeitenden Lager Luftlager sind.

10. Vorrichtung nach Anspruch 8, **dadurch gekennzeichnet, dass** die Stellantriebe Piezo-Aktoren sind.

## Claims

1. A device for detecting and/or adjusting the position of two bodies capable of being moved relative to each other, with cross gratings being arranged on the bodies, **characterized in that** a plane areal measurement standard is arranged on a body (2) as a plane reference surface (4) having a two-dimensional grating division (3a, 3b), and a plane surface (9) capable of being aligned parallel to the measurement standard and having at least two gratings (6, 7, 8) provided in it or parallel to it on the other body (1), the gratings forming a scanning head, and that, moreover, at least one device (10, 11, 12) acting between the two mentioned body surfaces is provided for individual distance detection of the two surfaces (4, 9).

2. The device according to claim 1, **characterized in that** three distance-measuring devices are provided between the two body surfaces, said devices being arranged at three locations which are not situated on a common straight line.

3. The device according to claim 1 or 2, **characterized in that** three gratings are provided on said other body, two of which being parallel to each other.

4. The device according to one of claims 1 through 3, **characterized in that** the distance-measuring devices are devices that operate capacitively, inductively, mechano-haptically, or by dynamic pressure.

5. The device according to claim 4, **characterized in that** the distance-measuring devices are designed as probes, and project perpendicularly from the one and/or the other surface.

6. The device according to one of claims 1 through 5, **characterized in that** provision is made for means for storing and/or processing the position values detected on the occasion of an arbitrary relative motion of the two bodies, or for executing out such a motion in a controlled manner on the basis of given target values.

7. The device according to one of claims 1 through 6, **characterized in that** the gratings are optical gratings.

8. A device for positioning parts, preferably of a wafer stepper, according to one of claims 1 through 7, **characterized in that**, in addition, bearings and actuators working in a contact-free manner are provided on the component carrier body for the distance-measuring devices, the distance or the position between the component carrier body and the two-dimensional grating division (cross grating) or its carrier body being able to be adjusted using the bearings and actuators with the aid of the distance-measuring devices.

9. The device according to claim 8, **characterized in that** the bearings which work in a contact-free manner are air bearings.

10. The device according to claim 8, **characterized in that** the actuators are piezoelectric actuators.

## Revendications

1. Dispositif de détection et/ou d'ajustement de la position de deux corps pouvant être déplacés relativement l'un par rapport à l'autre, avec des repères sous forme de treillis à traits en croix disposés sur les corps, **caractérisé en ce qu'**une surface normalisée plane est disposée sur l'un des corps (2) comme surface de référence plane (4) avec division à deux dimensions (3a, 3b) du treillis, ainsi qu'une surface plane (9) pouvant être alignée en parallèle à ladite surface normalisée, disposée sur l'autre corps (1) et présentant au moins deux treillis (6, 7, 8) prévus dans ladite surface plane ou parallèlement à cette surface, ces treillis formant une tête de lecture, et **en ce qu'**il est prévu en plus au moins un dispositif (10, 11, 12) agissant entre lesdites surfaces sur les deux corps pour la détection individuelle de la distance entre les deux surfaces (4, 9).

2. Dispositif selon la revendication 1, **caractérisé en ce que** trois dispositifs de détection de distance sont prévus entre lesdites deux surfaces de corps, ces dispositifs étant disposée à trois endroits non-situés sur une ligne droite commune.

3. Dispositif selon la revendication 1 ou 2, **caractérisé en ce que** trois repères sous forme de treillis à traits sont prévus sur ledit autre corps dont deux sont parallèles l'un par rapport à l'autre.

4. Dispositif selon l'une des revendications 1 à 3, **caractérisé en ce que** lesdits dispositifs de détection de distance sont des dispositifs opérant sur une base capacitive, inductive, à palpeur mécanique ou par pression dynamique.

5. Dispositif selon la revendication 4, **caractérisé en ce que** les dispositifs de détection de distance comprennent un palpeur projetant perpendiculairement de l'une ou de l'autre desdites surfaces.

6. Dispositif selon l'une des revendications 1 à 5, **caractérisé par** des moyens pour mémoriser et/ou traiter des valeurs de position détectées lors d'un mouvement relatif arbitraire entre les deux corps ou pour exécuter un tel mouvement de manière commandé sur la base de valeurs prédéterminées d'un but.

7. Dispositif selon l'une des revendications 1 à 6, **caractérisé en ce que** les treillis à traits sont des réseaux de diffraction optiques.

8. Dispositif pour positionner des éléments, notamment d'un wafer-stepper, selon l'une des revendications 1 à 7, **caractérisé en ce qu'**en plus des paliers et des moyens d'actionnement sans contact sont prévus sur le support de composantes pour les dispositifs de détection de distance permettant à régler la distance ou la position entre le support de composantes et la division à deux dimension des treillis (repères en croix) respectivement leur support à l'aide desdits dispositifs de détection de distance.

9. Dispositif selon la revendication 8, **caractérisé en ce que** lesdits paliers sans contact sont des paliers d'air.

10. Dispositif selon la revendication 8, **caractérisé en ce que** les moyens d'actionnement comprennent des éléments piézoélectriques.
